# EUROPEAN PATENT APPLICATION

(11) **EP 1 681 844 A1**
(43) Date of publication of application: **19.07.2006**
(21) Application number: 05000839.0
(22) Date of filing: 17.01.2005
(51) Int. Cl.: H04M 7/00

(54) **Method for establishing a telephone communication using a web phone with modules for Internet and PSTN connections**

(71) Applicant: Aevoe incorporated, Taipei City (TW)
(72) Inventor: Huang, Cheng-Su, Songshan District Taipei City (TW); Li, Jon Yen, Neipu Hsiang Ping-Tun Hsien (TW)
(74) Representative: Schmitz, Hans-Werner

(57) **Abstract**

The method includes receiving a phone number of a destination by the dialing module (20, 410, 430, 710, 1010, 1030), reading a record corresponding to the destination from the phone book system (22, 412, 432, 712, 1012, 1032) according to the phone number by the control module (16, 406, 426, 706, 1006, 1026), calling the destination through Internet for requesting an Internet connection according to the record of the destination by the voice over Internet protocol module (14, 404, 424, 704, 1004, 1024), calling the destination through the public switched telephone network for establishing a public switched telephone network connection for indicating the destination an incoming phone according to the phone number by the public switched telephone network module (12, 402, 422, 702, 1002, 1022), and cutting off the public switched telephone network connection and establishing the telephone communication through the Internet connection when the destination accepts the request of the Internet connection.

## Description

The present invention relates to a method for establishing a telephone communication with a web phone according to the pre-characterizing clause of claim 1.

With the highly developed and popular Internet, communication becomes more and more convenient. In the past, only through a public switched telephone network, or PSTN, could a real-time voice communication be realized, but now, the technology of voice over Internet protocol, or VOIP, makes real-time voice communication through the Internet possible. VOIP technology provides not only high-quality voice communication, but also exchanges of real-time images, data, etc. because the Internet has a larger bandwidth than the PSTN. Moreover, charges for Internet communication, especially for long-distance communication, are much cheaper than those for PSTN communication.

Therefore, communication through the Internet provides the service of high-quality voice and images exchanges with cheap charges. However, since a VOIP system is constructed under Internet protocol, most prior art web phones are implemented by software in a computer. That is, a user must use the web phone through the computer, which is much different from typical dialing. Besides, before using the web phone for calling a destination, the user must make sure that the destination is also a web phone, which is again inconvenient.

This in mind, the present invention aims at providing a method for establishing a telephone communication with a web phone.

This is achieved by a method for establishing the telephone communication according to a record corresponding to a destination in a phone book system of the web phone according to claim 1. The dependent claims pertain to corresponding further developments and improvements.

As will be seen more clearly from the detailed description following below, the claimed web-phone can decrease telephone costs, provide high-quality exchanges of voice and images, and perform an identification procedure according to MAC addresses, so an erroneous connection can be avoided due to the invariant and unique MAC addresses on all network devices.

In the following, the invention is further illustrated by way of example, taking reference to the accompanying drawings. Thereof:
Fig.1 illustrates a block diagram of a web phone in accordance with the present invention;
Fig.2 illustrates a schematic diagram of columns of a phone book in a phone book system of a web phone in accordance with the present invention;
Fig.3 illustrates a flowchart of a process for establishing a telephone communication with a web phone in accordance with the present invention;
Fig.4 illustrates a schematic diagram of two web phones when establishing a telephone communication in accordance with the present invention;
Fig.5 illustrates a flowchart of another embodiment process for establishing telephone communication with a web phone in accordance with the present invention;
Fig.6 illustrates a flowchart of another embodiment process for establishing a telephone communication with a web phone in accordance with the present invention;
Fig.7 illustrates a schematic diagram of a web phone and a PSTN phone when establishing a telephone communication;
Fig.8 illustrates a schematic diagram of columns of a phone book in a phone book system of a web phone in accordance with the present invention;
Fig.9 illustrates a flowchart of another embodiment process for establishing a telephone communication with a web phone in accordance with the present invention;
Fig.10 illustrates a schematic diagram of two web phones when establishing a telephone communication in accordance with the present invention; and
Fig.11 illustrates a flowchart of another embodiment process for establishing a telephone communication with a web phone in accordance with the present invention.

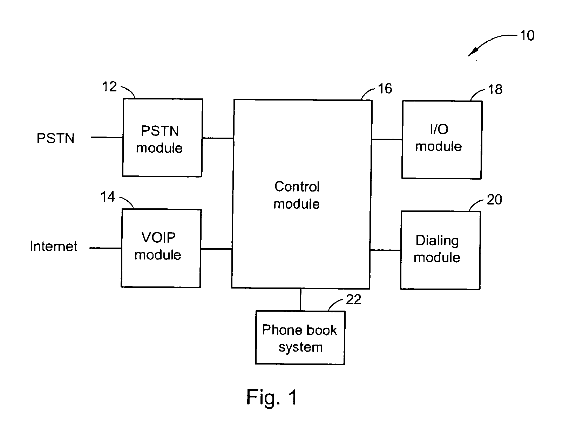

Please refer to Fig.1, which illustrates a block diagram of a web phone 10 in accordance with the present invention. The web phone 10 includes a PSTN module 12, a VOIP module 14, a control module 16, an input and output module 18, and a dialing module 20. The PSTN module 12 is coupled to a public switched telephone network for receiving and transmitting voice signals through the public switched telephone network. The VOIP module 14 is coupled to the Internet for receiving and transmitting digital signals through the Internet. The control module 16 controls operations of the PSTN module 12 and the VOIP module 14, and outputs sound, images, etc. through the input and output module 18. The dialing module 20 receives a phone number, and the control module 16 searches for a record corresponding to the phone number in a phone book system 22 of the control module according to the phone number.

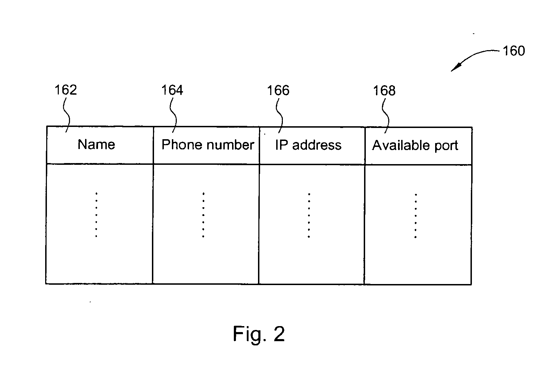

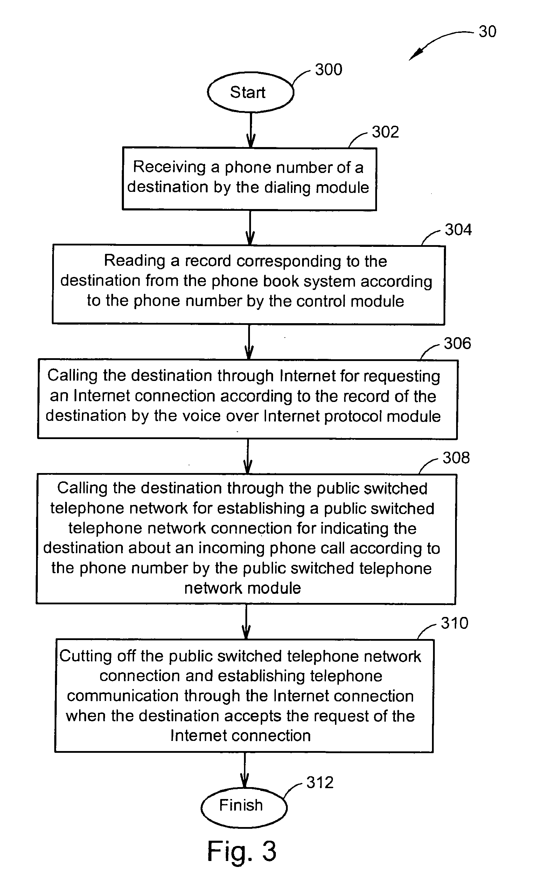

Please refer to Fig.2, which illustrates a schematic diagram of columns of a phone book 160 in the phone book system 22. The phone book 160 includes columns 162, 164, 166, and 168 for storing names, phone numbers, IP addresses, and available ports. Other than the phone book 160, the phone book system 16 can also include a dialed-call record, a received-call record, and a missed-call record all having the same columns as the phone book 160. Please refer to Fig.3, which illustrates a flowchart of a process 30 for establishing a telephone communication with a web phone in accordance with the present invention. The process 30 includes following steps:
- Step 300:: start;
- Step 302:: receiving a phone number of a destination by the dialing module;
- Step 304:: reading a record corresponding to the destination from the phone book system according to the phone number by the control module;
- Step 306:: calling the destination through Internet for requesting an Internet connection according to the record of the destination by the voice over Internet protocol module;
- Step 308:: calling the destination through the public switched telephone network for establishing a public switched telephone network connection for indicating the destination about an incoming phone call according to the phone number by the public switched telephone network module;
- Step 310:: cutting off the public switched telephone network connection and establishing telephone communication through the Internet connection when the destination accepts the request of the Internet connection;
- Step 312:: finish.

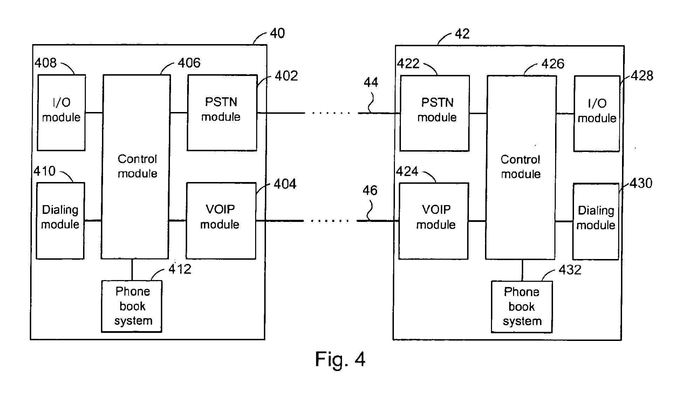

Therefore, according to the process 30, a web phone can establish a telephone communication through the Internet. For example, please refer to Fig.4, which illustrates a schematic diagram of two web phones 40 and 42 when establishing telephone communication. The web phone 40 includes a PSTN module 402, a VOIP module 404, a control module 406, an input and output module 408, and a dialing module 410. The web phone 42 includes a PSTN module 422, a VOIP module 424, a control module 426, an input and output module 428, and a dialing module 430. The control modules 406 and 426 include phone book systems 412 and 432. The phone book systems 412 and 432 store names, phone numbers, IP addresses, and available ports of a plurality of destinations in phone books, dialed-call records, received-call records, and missed-call records. In Fig.4, the line 44 is the public switched telephone network, and the line 46 is an Internet. The web phone 40 includes a phone number PNa, an IP address IPa, and an available port PTa, while the web phone 42 includes a phone number PNb, an IP address IPb, and an available port PTb. After a user dials the phone number PNb of the web phone 42 through the dialing module 410 of the web phone 40, the control module 406 of the web phone 40 reads the IP address IPb and the available port PTb corresponding to the phone number PNb in the phone book system 412, then the VOIP module 404 of the web phone 40 calls the web phone 42 through the line 46 according to the IP address IPb and the available port PTb, and the control module 406 stores the record (or the phone number PNb, the IP address IPb, and the available port PTb) of the web phone 42 in the dialed-call record. At this moment, the web phone 42 does not trigger the input and output module 422 to ring or output any signal. After that, the PSTN module 402 of the web phone 40 calls the web phone 42 through the line 44 with a calling signal. If the web phone 42 receives the calling signal provided by the PSTN module 402 of the web phone 40, the input and output module 428 outputs a ring or other alarm signals, such as light and vibration. With the alarm signals provided by the input and output module 428, a user of the web phone 42 is made aware of an incoming phone call. Meanwhile, if the web phone 40 does not turn off a function of showing the phone number PNa, the control module 426 of the web phone 42 shows a name corresponding to the web phone 40 in the phone book system 432. Then, the user of the web phone 42 can decide whether to pick up the phone from the web phone 40 or not. If the user of the web phone 42 picks up the phone of the web phone 40, the control module 426 of the web phone 42 stores the record of the web phone 40 into the received-call record of the phone book system 432. Oppositely, if the user of the web phone 42 does not answer the phone, the control module 426 of the web phone 42 stores the record of the web phone 40 into the missed-call record of the phone book system 432. As long as the user of the web phone 42 answers the phone, the web phone 40 cuts off the connection through the PSTN, or the line 44, and establishes the communication with the web phone 42 through Internet, or the line 46. Therefore, the web phone 40 exchanges sound, images, or other signals with the web phone 42 through the Internet, so as to pay less money and gain high-quality communication.

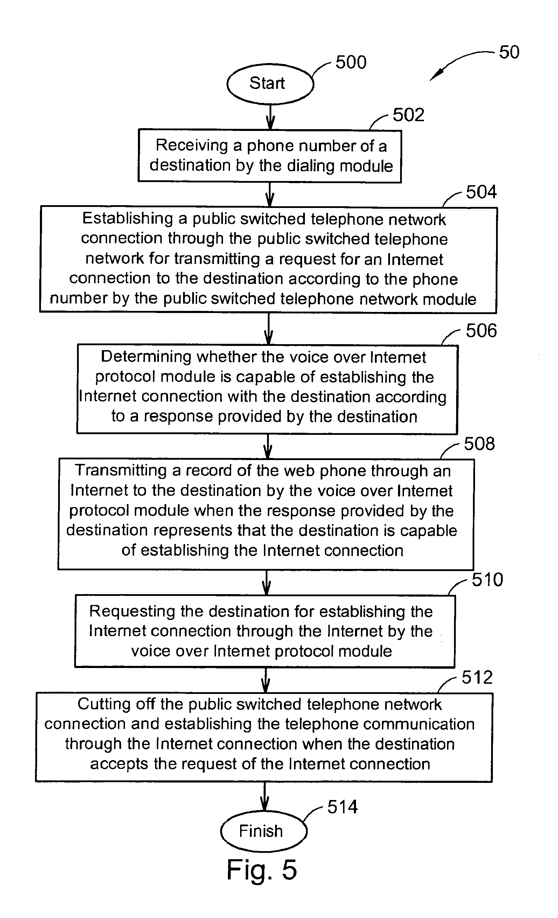

Following the example in Fig.4, if the phone book system 412 of the web phone 40 does not store the record of the web phone 42, please refer to Fig.5, which illustrates a flowchart of another embodiment process 50 for establishing telephone communication with a web phone in accordance with the present invention. The process 50 includes the following steps:
- Step 500:: start;
- Step 502:: receiving a phone number of a destination by the dialing module;
- Step 504:: establishing a public switched telephone network connection through the public switched telephone network for transmitting a request for an Internet connection to the destination according to the phone number by the public switched telephone network module;
- Step 506:: determining whether the voice over Internet protocol module is capable of establishing the Internet connection with the destination according to a response provided by the destination;
- Step 508:: transmitting a record of the web phone through an Internet to the destination by the voice over Internet protocol module when the response provided by the destination represents that the destination is capable of establishing the Internet connection;
- Step 510:: requesting the destination for establishing the Internet connection through the Internet by the voice over Internet protocol module;
- Step 512:: cutting off the public switched telephone network connection and establishing the telephone communication through the Internet connection when the destination accepts the request of the Internet connection;
- Step 514:: finish.

Therefore, according to the process 50, if the phone book system 412 of the web phone does not include the record of the web phone 40, after the user of the web phone 40 dials the phone number PNb of the web phone 42, the control module 406 of the web phone 40 asks the web phone 42 for a response to determine whether the web phone 42 can perform an Internet connection or not with the PSTN module 402 through the line 44. If the response provided by the web phone 42 represents that the web phone 42 can perform the Internet connection, the web phone 40 transmits the IP address IPa and the available port PTa of the web phone 40 with the VOIP module 404 through the line 46. After receiving the IP address IPa and the available port PTa of the web phone 40, the web phone 42 establishes an Internet connection with the web phone 40, and transmits the IP address IPb and the available port PTb to the web phone 40, then the web phone 40 communicates with the web phone 42 through the Internet according to the IP address IPb and the available port PTb, and cuts off the PSTN connection, so as to establish the telephone communication only through the Internet. Moreover, the web phone 40 stores the record of the web phone 42 (the phone number PNb, the IP address IPb, and the available port PTb) into the phone book and the dialed-call record of the phone book system 412, as does the web phone 42 store the record of the web phone 40 into the phone book and the received-call record of the phone book system 432. Therefore, when the web phone 40 or the web phone 42 calls the other, the control modules 406 and 426 can establish the telephone communication according to the process 30.

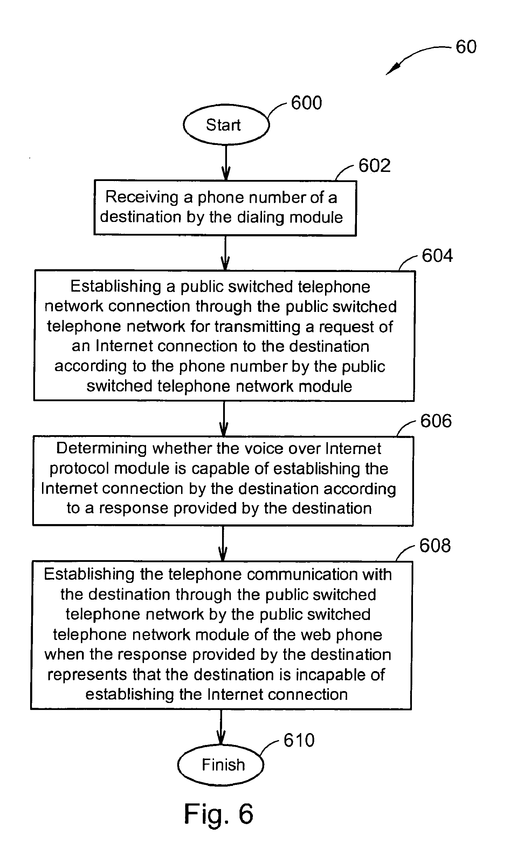

In addition, as to the situation where a destination does not provide an Internet connection, please refer to Fig.6, which illustrates a flowchart of a process 60 for establishing a telephone communication with a web phone in accordance with the present invention. The process 60 includes following steps:
- Step 600:: start;
- Step 602:: receiving a phone number of a destination by the dialing module;
- Step 604:: establishing a public switched telephone network connection through the public switched telephone network for transmitting a request of an Internet connection to the destination according to the phone number by the public switched telephone network module;
- Step 606:: determining whether the voice over Internet protocol module is capable of establishing the Internet connection by the destination according to a response provided by the destination;
- Step 608:: establishing the telephone communication with the destination through the public switched telephone network by the public switched telephone network module of the web phone when the response provided by the destination represents that the destination is incapable of establishing the Internet connection;
- Step 610:: finish.

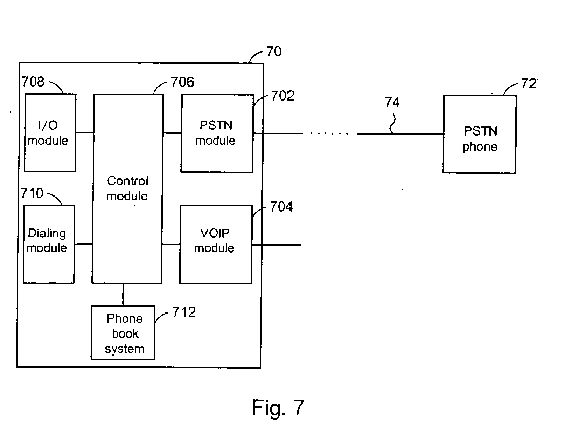

For example, please refer to Fig.7, which illustrates a schematic diagram of a web phone 70 and a PSTN phone 72 when establishing a telephone communication. The web phone 70 includes a PSTN module 702, a VOIP module 704, a control module 706, an input and output module 708, and a dialing module 710. The control module 706 includes a phone book system 712, which includes a phone book, a dialed-call record, a received-call record, and a missed-call record. In Fig.7, a line 74 is a PSTN. Since the phone book system 712 of the web phone 70 does not include a record of an IP address and an available port of the PSTN phone 72, the control module 706 of the web phone 70 asks the PSTN phone 72 for a response with the PSTN module 702 through the line 74, so as to determine whether the PSTN phone 72 can perform an Internet connection. The PSTN phone 72 does not include a VOIP module, so the web phone 70 cannot receive any response from the PSTN phone 72, and determines that the PSTN phone 72 cannot perform the Internet connection. Therefore, the PSTN module of the web phone 70 establishes the telephone communication with the PSTN phone 72 through the line 74, which is a standard connection via the PSTN.

In short, when a user of the web phone calls a destination, if the destination is a web phone, then communicating with each other is established through an Internet; otherwise, if the destination is a PSTN phone, then communicating is established through the PSTN.

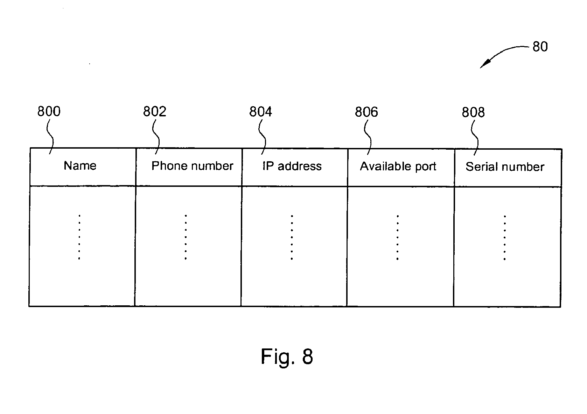

Furthermore, considering a web phone having no fixed IP address, an erroneous connection may occur due to the variable IP address. In order to improve the problem, the phone book system of the web phone can add columns of serial numbers each corresponding to only one web phone in the phone book, the dialed-call record, the received-call record, and the missed-call record. For example, the serial number can be a medium access control, or MAC, address of a web phone. Because all network devices have unique MAC addresses, the present invention performs an identification procedure according to the MAC address. Therefore, even if an IP address of a web phone is changed, the erroneous connection can be avoided due to the invariant MAC address. Please refer to Fig.8, which illustrates a schematic diagram of columns of a phone book 80 in a phone book system. Comparing to the phone book 160 in Fig.2, the phone book 80 includes columns 800, 802, 804, 806 for storing names, phone numbers, IP addresses, and available ports, and an additional column 808 for storing serial numbers. Each web phone has a unique serial number, so even if an IP address of a web phone is changed, the present invention can find the web phone according to a serial number of the web phone in the phone book system.

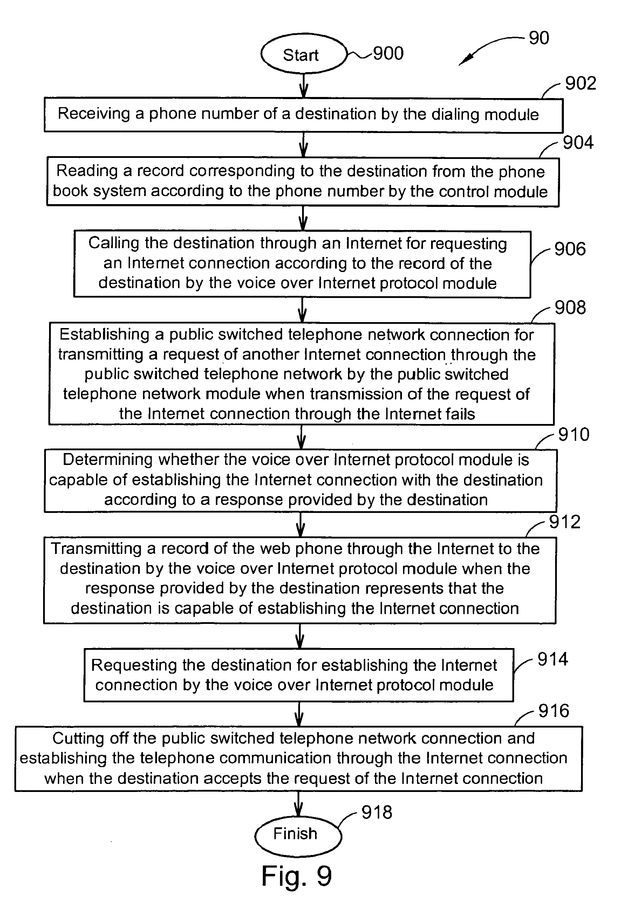

Please refer to Fig.9, which illustrates a flowchart of a process 90 for establishing a telephone communication with a web phone in accordance with the present invention. The process 90 includes following steps:
- Step 900:: start;
- Step 902:: receiving a phone number of a destination by the dialing module;
- Step 904:: reading a record corresponding to the destination from the phone book system according to the phone number by the control module;
- Step 906:: calling the destination through an Internet for requesting an Internet connection according to the record of the destination by the voice over Internet protocol module;
- Step 908:: establishing a public switched telephone network connection for transmitting a request of another Internet connection through the public switched telephone network by the public switched telephone network module when transmission of the request of the Internet connection through the Internet fails;
- Step 910:: determining whether the voice over Internet protocol module is capable of establishing the Internet connection with the destination according to a response provided by the destination;
- Step 912:: transmitting a record of the web phone through the Internet to the destination by the voice over Internet protocol module when the response provided by the destination represents that the destination is capable of establishing the Internet connection;
- Step 914:: requesting the destination for establishing the Internet connection by the voice over Internet protocol module;
- Step 916:: cutting off the public switched telephone network connection and establishing the telephone communication through the Internet connection when the destination accepts the request of the Internet connection;
- Step 918:: finish.

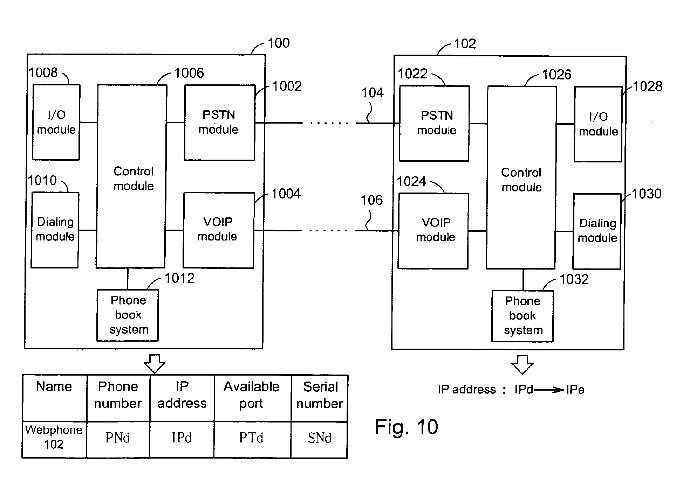

Therefore, according to the process 90, the web phone can prevent erroneous connections caused by variable IP addresses. For example, please refer to Fig.10, which illustrates a schematic diagram of two web phones 100 and 102 when establishing a telephone communication. The web phone 100 includes a PSTN module 1002, a VOIP module 1004, a control module 1006, an input and output module 1008, and a dialing module 1010. The control module 1006 includes a phone book system 1012 having a phone book, a dialed-call record, a received-call record, and a missed-call record for storing names, phone numbers, IP addresses, available ports, and serial numbers of a plurality of web phones. The web phone 102 includes a PSTN module 1022, a VOIP module 1024, a control module 1026, an input and output module 1028, and a dialing module 1030. The control module 1026 includes a phone book system 1032 having a phone book, a dialed-call record, a received-call record, and a missed-call record for storing names, phone numbers, IP addresses, available ports, and serial numbers of a plurality of web phones. In Fig. 10, a line 104 is a public switched telephone network, and a line 106 is an Internet. The web phone 100 includes a phone number PNc, an IP address IPc, an available port PTc, and a serial number SNc, while the web phone 102 includes a phone number PNd, an IP address IPd, an available port PTd, and a serial number SNd. If the phone book system 1012 of the web phone 100 has stored a record of the phone number PNd, the IP address IPd, the available port PTd, and the serial number SNd of the web phone 102, then when a user of the web phone 100 calls the web phone 102, the web phone 100 can establish the telephone communication according to the record of the web phone 102 in the phone book system 1012. Suppose the IP address of the web phone 102 changes from IPd to IPe while the web phone 100 does not update the phone book system 1012. When a user dials the phone number PNb of the web phone 102 with the dialing module 100 of the web phone 100, the control module 1006 of the web phone 100 reads the IP address IPd, the available port PTd, and the serial number SNd corresponding to the phone number PNd from the phone book system 1012. Since the IP address of the web phone 102 has been changed to IPe, the web phone 100 should have connected to another web phone through Internet, but owing to the serial number SNd corresponding to only the web phone 102, the web phone 100 can detect that the IP address IPd stored in the phone book system 1012 does not correspond to the web phone 102, and deletes the IP address IPd corresponding to the phone number PNd from the phone book system 1012. Then, the control module 1006 of the web phone 100 asks the web phone 102 for a response through the line 104 with the PSTN module 1002, so as to determine whether the web phone 102 can perform an Internet connection or not. If the response provided by the web phone 102 represents that the web phone 102 can perform the Internet connection, the web phone 100 transmits the record of the web phone 100 to the web phone 102 through the line 106 with the VOIP module 1004. After receiving the record of the web phone 100, the web phone 102 establishes an Internet connection with the web phone 100, and transmits the IP address IPe, the available port PTd, and the serial number SNd to the web phone 100. Then, the web phone 100 establishes the telephone communication with the web phone 102 through the Internet according to the IP address IPe, and the available port PTd, and cuts off the PSTN connection. In addition, the web phone 100 stores the record, including the phone number PNd, the IP address IPe, the available port PTd, and the serial number SNd, of the web phone 102 into the phone book and the dialed-call record of the phone book system 1012, while the web phone 102 also stores the record of the web phone 100 into the phone book and the received-call record of the phone book system 1032. Therefore, when the web phone 100 or the web phone 102 calls the other, the control modules 1006 and 1026 can establish the telephone communication according to the process 30. As mentioned above, the serial numbers SNc and SNd can be set to the MAC addresses of the web phones, and the present invention can perform an identification procedure according to the MAC address. As a result, even if an IP address of a web phone is changed, the error connection can be avoided owing to the invariant MAC address.

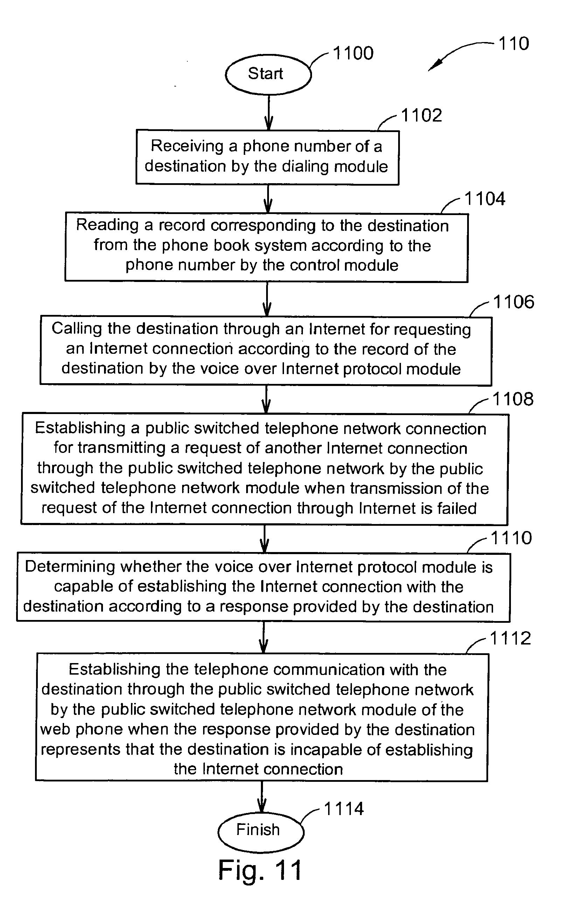

Moreover, the Internet connection of a web phone may fail, so the web phone cannot establish a telephone communication through Internet. In this case, the present invention provides another embodiment. Please refer to Fig.11, which illustrates a flowchart of a process 110 for establishing a telephone communication with a web phone in accordance with the present invention. The process 110 includes following steps:
- Step 1100:: start;
- Step 1102:: receiving a phone number of a destination by the dialing module;
- Step 1104:: reading a record corresponding to the destination from the phone book system according to the phone number by the control module;
- Step 1106:: calling the destination through an Internet for requesting an Internet connection according to the record of the destination by the voice over Internet protocol module;
- Step 1108:: establishing a public switched telephone network connection for transmitting a request of another Internet connection through the public switched telephone network by the public switched telephone network module when transmission of the request of the Internet connection through Internet is failed;
- Step 1110:: determining whether the voice over Internet protocol module is capable of establishing the Internet connection with the destination according to a response provided by the destination;
- Step 1112:: establishing the telephone communication with the destination through the public switched telephone network by the public switched telephone network module of the web phone when the response provided by the destination represents that the destination is incapable of establishing the Internet connection;
- Step 1114:: finish.

Therefore, with the process 110, the present invention can establish the telephone communication through the PSTN when the Internet connection has failed, so even if a destination is not a web phone, the present invention can still establish the communication. That is, the present invention can establish the telephone communication not only with another web phone, but also a typical PSTN phone, which increases convenience, and meets most people's needs.

In summary, the present invention provides several embodiments for establishing a telephone communication with a web phone. Internet communication provides exchange services of high-quality voice and images, and most important, charges for Internet communication are much cheaper than those for PSTN communication, especially for long-distance communication. The present invention can be implemented in a phone device combining a PSTN phone and a web phone. The above-mentioned input and output modules are not limited in voice process devices, which can also includes liquid crystal displays, or LCDs, image transceivers, etc. Therefore, the present invention can decrease telephone costs, and provide high-quality exchanges of voice and images. In addition, the serial numbers in the phone book systems can be set as MAC addresses, and the present invention can perform an identification procedure according to the MAC address, so an erroneous connection can be avoided due to the invariant and unique MAC addresses on all network devices.

## Claims

1. A method for establishing a telephone communication with a web phone (10, 40, 42, 70, 100, 102), the web phone (10, 40, 42, 70, 100, 102) comprising:
a dialing module (20, 410, 430, 710, 1010, 1030) for receiving a phone number;
a public switched telephone network module (12, 402, 422, 702, 1002, 1022) for exchanging signals through a public switched telephone network;
a voice over Internet protocol module (14, 404, 424, 704, 1004, 1024) for exchanging signals through an Internet;
an input and output module (18, 408, 428, 708, 1008, 1028) for receiving and outputting signals;
a phone book system (22, 412, 432, 712, 1012, 1032) for storing a plurality of records corresponding to a plurality of destinations; and
a control module (16, 406, 426, 706, 1006, 1026) for controlling the public switched telephone network module (12, 402, 422, 702, 1002, 1022), the voice over Internet protocol module (14, 404, 424, 704, 1004, 1024), and the input and output module (18, 408, 428, 708, 1008, 1028) for establishing the telephone communication according to the phone number received by the dialing module (20, 410, 430, 710, 1010, 1030);
the method comprising:
(a) receiving a phone number of a destination by the dialing module (20, 410, 430, 710, 1010, 1030); and
(b) reading a record corresponding to the destination from the phone book system (22, 412, 432, 712, 1012, 1032) according to the phone number by the control module (16, 406, 426, 706, 1006, 1026);
**characterized in that** the method further comprises:
(c) calling the destination through the Internet for requesting an Internet connection according to the record of the destination by the voice over Internet protocol module (14, 404, 424, 704, 1004, 1024);
(d) calling the destination through the public switched telephone network for establishing a public switched telephone network connection for indicating the destination of an incoming phone call according to the phone number by the public switched telephone network module (12, 402, 422, 702, 1002, 1022); and
(e) cutting off the public switched telephone network connection and establishing the telephone communication through the Internet connection when the destination accepts the request of the Internet connection.

2. The method of claim 1, **characterized in that** in step (b), the record of the destination comprises an Internet protocol address and an available port of the destination.

3. The method of claim 2, **characterized in that** the record of the destination further comprises a serial number of the destination.

4. The method of claim 3, **characterized in that** the serial number of the destination is a medium access control address of the destination.

5. The method of claim 1, **characterized in that** step (c) further comprises transmitting a record of the web phone (10, 40, 42, 70, 100, 102) to the destination by the voice over Internet protocol module (14, 404, 424, 704, 1004, 1024) .

6. The method of claim 5, **characterized in that** the record of the web phone (10, 40, 42, 70, 100, 102) comprises an Internet protocol address and an available port of the web phone (10, 40, 42, 70, 100, 102).

7. The method of claim 6, **characterized in that** the record of the web phone (10, 40, 42, 70, 100, 102) further comprises a serial number of the web phone (10, 40, 42, 70, 100, 102).

8. The method of claim 7, **characterized in that** the serial number of the web phone (10, 40, 42, 70, 100, 102) is a medium access control address of the web phone (10, 40, 42, 70, 100, 102).

9. The method of claim 1, **characterized in that** step (e) further comprises cutting off the public switched telephone network connection and the Internet connection when the destination rejects the telephone communication.

10. The method of claim 1, **characterized in that** the method further comprises updating the phone book system (22, 412, 432, 712, 1012, 1032) of the web phone (10, 40, 42, 70, 100, 102).

11. A method for establishing a telephone communication with a web phone (10, 40, 42, 70, 100, 102), the web phone (10, 40, 42, 70, 100, 102) comprising:
a dialing module (20, 410, 430, 710, 1010, 1030) for receiving a phone number;
a public switched telephone network module (12, 402, 422, 702, 1002, 1022) for exchanging signals through a public switched telephone network;
a voice over Internet protocol module (14, 404, 424, 704, 1004, 1024) for exchanging signals through an Internet;
an input and output module (18, 408, 428, 708, 1008, 1028) for receiving and outputting signals;
a phone book system (22, 412, 432, 712, 1012, 1032) for storing a plurality of records corresponding to a plurality of destinations; and
a control module (16, 406, 426, 706, 1006, 1026) for controlling the public switched telephone network module (12, 402, 422, 702, 1002, 1022), the voice over Internet protocol module (14, 404, 424, 704, 1004, 1024), and the input and output module (18, 408, 428, 708, 1008, 1028) for establishing the telephone communication according to the phone number received by the dialing module (20, 410, 430, 710, 1010, 1030);
the method comprising:
(a) receiving a phone number of a destination by the dialing module (20, 410, 430, 710, 1010, 1030);
**characterized in that** the method further comprises:
(b) establishing a public switched telephone network connection through the public switched telephone network for transmitting a request for an Internet connection to the destination according to the phone number by the public switched telephone network module (12, 402, 422, 702, 1002, 1022);
(c) determining whether the voice over Internet protocol module (14, 404, 424, 704, 1004, 1024) is capable of establishing the Internet connection by the destination according to a response provided by the destination;
(d) transmitting a record of the web phone (10, 40, 42, 70, 100, 102) through the Internet to the destination by the voice over Internet protocol module (14, 404, 424, 704, 1004, 1024) when the response provided by the destination represents that the destination is capable of establishing the Internet connection;
(e) requesting the destination for establishing the Internet connection by the voice over Internet protocol module (14, 404, 424, 704, 1004, 1024); and
(f) cutting off the public switched telephone network connection and establishing the telephone communication through the Internet connection when the destination accepts the request of the Internet connection.

12. The method of claim 11, **characterized in that** in step (d), the record of the web phone (10, 40, 42, 70, 100, 102) comprises an Internet protocol address and an available port of the web phone (10, 40, 42, 70, 100, 102).

13. The method of claim 12, **characterized in that** the record of the web phone (10, 40, 42, 70, 100, 102) further comprises a serial number of the web phone (10, 40, 42, 70, 100, 102).

14. The method of claim 13, **characterized in that** the serial number of the web phone (10, 40, 42, 70, 100, 102) is a medium access control address of the web phone (10, 40, 42, 70, 100, 102).

15. The method of claim 11, **characterized in that** step (d) further comprises receiving the record of the destination by the voice over Internet protocol module (14, 404, 424, 704, 1004, 1024).

16. The method of claim 15, **characterized in that** the record of the destination comprises an Internet protocol address and an available port of the destination.

17. The method of claim 16, **characterized in that** the record of the destination further comprises a serial number of the destination.

18. The method of claim 17, **characterized in that** the serial number of the destination is a medium access control address of the destination.

19. The method of claim 11, **characterized in that** step (f) further comprises cutting off the public switched telephone network connection and the Internet connection when the destination rejects the telephone communication.

20. The method of claim 11, **characterized in that** the method further comprises updating the phone book system (22, 412, 432, 712, 1012, 1032) of the web phone (10, 40, 42, 70, 100, 102).

21. A method for establishing a telephone communication with a web phone (10, 40, 42, 70, 100, 102), the web phone (10, 40, 42, 70, 100, 102) comprising:
a dialing module (20, 410, 430, 710, 1010, 1030) for receiving a phone number;
a public switched telephone network module (12, 402, 422, 702, 1002, 1022) for exchanging signals through a public switched telephone network;
a voice over Internet protocol module (14, 404, 424, 704, 1004, 1024) for exchanging signals through an Internet;
an input and output module (18, 408, 428, 708, 1008, 1028) for receiving and outputting signals;
a phone book system (22, 412, 432, 712, 1012, 1032) for storing a plurality of records corresponding to a plurality of destinations; and
a control module (16, 406, 426, 706, 1006, 1026) for controlling the public switched telephone network module (12, 402, 422, 702, 1002, 1022), the voice over Internet protocol module (14, 404, 424, 704, 1004, 1024), and the input and output module (18, 408, 428, 708, 1008, 1028) for establishing the telephone communication according to the phone number received by the dialing module (20, 410, 430, 710, 1010, 1030);
the method comprising:
(a) receiving a phone number of a destination by the dialing module (20, 410, 430, 710, 1010, 1030);
**characterized in that** the method further comprises:
(b) establishing a public switched telephone network connection through the public switched telephone network for transmitting a request for an Internet connection to the destination according to the phone number by the public switched telephone network module (12, 402, 422, 702, 1002, 1022);
(c) determining whether the voice over Internet protocol module (14, 404, 424, 704, 1004, 1024) is capable of establishing the Internet connection by the destination according to a response provided by the destination; and
(d) establishing the telephone communication with the destination through the public switched telephone network by the public switched telephone network module (12, 402, 422, 702, 1002, 1022) of the web phone (10, 40, 42, 70, 100, 102) when the response provided by the destination represents that the destination is incapable of establishing the Internet connection.

22. The method of claim 21, **characterized in that** the method further comprises updating the phone book system (22, 412, 432, 712, 1012, 1032) of the web phone (10, 40, 42, 70, 100, 102).

23. A method for establishing a telephone communication with a web phone (10, 40, 42, 70, 100, 102), the web phone (10, 40, 42, 70, 100, 102) comprising:
a dialing module (20, 410, 430, 710, 1010, 1030) for receiving a phone number;
a public switched telephone network module (12, 402, 422, 702, 1002, 1022) for exchanging signals through a public switched telephone network;
a voice over Internet protocol module (14, 404, 424, 704, 1004, 1024) for exchanging signals through an Internet;
an input and output module (18, 408, 428, 708, 1008, 1028) for receiving and outputting signals;
a phone book system (22, 412, 432, 712, 1012, 1032) for storing a plurality of records corresponding to a plurality of destinations; and
a control module (16, 406, 426, 706, 1006, 1026) for controlling the public switched telephone network module (12, 402, 422, 702, 1002, 1022), the voice over Internet protocol module (14, 404, 424, 704, 1004, 1024), and the input and output module (18, 408, 428, 708, 1008, 1028) for establishing the telephone communication according to the phone number received by the dialing module (20, 410, 430, 710, 1010, 1030);
the method comprising:
(a) receiving a phone number of a destination by the dialing module (20, 410, 430, 710, 1010, 1030); and
(b) reading a record corresponding to the destination from the phone book system (22, 412, 432, 712, 1012, 1032) according to the phone number by the control module (16, 406, 426, 706, 1006, 1026);
**characterized in that** the method further comprises:
(c) calling the destination through the Internet for requesting an Internet connection according to the record of the destination by the voice over Internet protocol module (14, 404, 424, 704, 1004, 1024);
(d) establishing a public switched telephone network connection for transmitting a request for another Internet connection through the public switched telephone network by the public switched telephone network module (12, 402, 422, 702, 1002, 1022) when transmission of the request of the Internet connection through the Internet fails;
(e) determining whether the voice over Internet protocol module (14, 404, 424, 704, 1004, 1024) is capable of establishing the Internet connection with the destination according to a response provided by the destination;
(f) transmitting a record of the web phone (10, 40, 42, 70, 100, 102) through the Internet to the destination by the voice over Internet protocol module (14, 404, 424, 704, 1004, 1024) when the response provided by the destination represents that the destination is capable of establishing the Internet connection;
(g) requesting the destination for establishing the Internet connection through Internet by the voice over Internet protocol module (14, 404, 424, 704, 1004, 1024); and
(h) cutting off the public switched telephone network connection and establishing the telephone communication through the Internet connection when the destination accepts the request of the Internet connection.

24. The method of claim 23, **characterized in that** in step (b), the record of the destination comprises an Internet protocol address, an available port, and a serial number of the destination.

25. The method of claim 24, **characterized in that** the serial number of the destination is a medium access control address of the destination.

26. The method of claim 23, **characterized in that** in step (f), the record of the web phone (10, 40, 42, 70, 100, 102) comprises an Internet protocol address, an available port, and a serial number of the web phone (10, 40, 42, 70, 100, 102).

27. The method of claim 26, **characterized in that** the serial number of the web phone (10, 40, 42, 70, 100, 102) is a medium access control address of the web phone (10, 40, 42, 70, 100, 102).

28. The method of claim 23, **characterized in that** step (h) further comprises cutting off the public switched telephone network connection and the Internet connection when the destination rejects the telephone communication.

29. The method of claim 23, **characterized in that** the method further comprises updating the phone book system (22, 412, 432, 712, 1012, 1032) of the web phone (10, 40, 42, 70, 100, 102).

30. A method for establishing a telephone communication with a web phone (10, 40, 42, 70, 100, 102), the web phone (10, 40, 42, 70, 100, 102) comprising:
a dialing module (20, 410, 430, 710, 1010, 1030) for receiving a phone number;
a public switched telephone network module (12, 402, 422, 702, 1002, 1022) for exchanging signals through a public switched telephone network;
a voice over Internet protocol module (14, 404, 424, 704, 1004, 1024) for exchanging signals through an Internet;
an input and output module (18, 408, 428, 708, 1008, 1028) for receiving and outputting signals;
a phone book system (22, 412, 432, 712, 1012, 1032) for storing a plurality of records corresponding to a plurality of destinations; and
a control module (16, 406, 426, 706, 1006, 1026) for controlling the public switched telephone network module (12, 402, 422, 702, 1002, 1022), the voice over Internet protocol module (14, 404, 424, 704, 1004, 1024), and the input and output module (18, 408, 428, 708, 1008, 1028) for establishing the telephone communication according to the phone number received by the dialing module (20, 410, 430, 710, 1010, 1030);
the method comprising:
(a) receiving a phone number of a destination by the dialing module (20, 410, 430, 710, 1010, 1030); and
(b) reading a record corresponding to the destination from the phone book system (22, 412, 432, 712, 1012, 1032) according to the phone number by the control module (16, 406, 426, 706, 1006, 1026);
**characterized in that** the method further comprises:
(c) calling the destination through the Internet for requesting an Internet connection according to the record of the destination by the voice over Internet protocol module (14, 404, 424, 704, 1004, 1024);
(d) establishing a public switched telephone network connection for transmitting a request for another Internet connection through the public switched telephone network by the public switched telephone network module (12, 402, 422, 702, 1002, 1022) when transmission of the request of the Internet connection through the Internet fails;
(e) determining whether the voice over Internet protocol module (14, 404, 424, 704, 1004, 1024) is capable of establishing the Internet connection with the destination according to a response provided by the destination; and
(f) establishing the telephone communication with the destination through the public switched telephone network by the public switched telephone network module (12, 402, 422, 702, 1002, 1022) of the web phone (10, 40, 42, 70, 100, 102) when the response provided by the destination represents that the destination is incapable of establishing the Internet connection.

31. The method of claim 30, **characterized in that** in step (b), the record of the destination comprises an Internet protocol address, an available port, and a serial number of the destination.

32. The method of claim 31, **characterized in that** the serial number of the destination is a medium access control address of the destination.

33. The method of claim 30, **characterized in that** the method further comprises updating the phone book system (22, 412, 432, 712, 1012, 1032) of the web phone (10, 40, 42, 70, 100, 102).
